# EUROPÄISCHE PATENTSCHRIFT

(11) **EP 0 626 284 B1**
(45) Veröffentlichungstag und Bekanntmachung des Hinweises auf die Patenterteilung: **14.10.1998**
(21) Anmeldenummer: 94810270.2
(22) Anmeldetag: 06.05.1994
(51) Int. Cl.: B60J 7/10

(54) **Vorrichtung am einem Fahrzeug mit Ladefläche und über dieser spannbar angeordneter flexibler Deckhaut**
Device for a lorry floor and a tarpaulin to be fastened above the floor
Dispositif pour la plateforme de chargement d'un camion et bâche tendue au-dessus de cette plateforme

(30) Priorität: 22.05.1993 DE 9307763 U
(43) Veröffentlichungstag der Anmeldung: 30.11.1994
(73) Patentinhaber: Alusuisse Technology & Management AG, 8212 Neuhausen am Rheinfall (CH)
(72) Erfinder: Röllin, Ulrich, CH-8048 Zürich (CH)

(56) Entgegenhaltungen:
- DE-A- 2 932 998
- DE-U- 9 307 763
- FR-A- 2 667 283
- US-A- 5 152 574

## Beschreibung

Die Erfindung betrifft eine Vorrichtung an einem Fahrzeug mit Ladefläche und über dieser spannbar angeordneter flexibler Deckhaut, die seitlich an der Ladefläche sowie in Abstand über dieser -- insbesondere an einer sog. Toplaufschiene --festlegbar ist.

Auf dem Markt ist seit langem eine Aufbauart mit der Bezeichnung "Curtainsider" oder Seiltuchwagen bekannt, nämlich ein Plattform- oder Pritschen-Fahrzeug mit einem Aufbau aus einer festen Stirnwand, einem festen Heckrahmen, seitlichen Rungenprofilen und sog. Toplaufschienenprofilen. Im Toplaufschienenprofil wird eine in horizontaler Richtung verschiebbare Plane als Deckhaut befestigt und seitlich auf der Plattformebene mittels mehrerer Spanngurte in vertikaler Richtung gespannt. Für die horizontale Planenspannung ist in der Stirnwand bzw. im Heckrahmen eine mechanische Spanneinrichtung vorhanden. Bei dieser Aufbauart werden keine Bordwände benötigt, und ihr Vorteil ist, daß die Plane am Toplaufschienenprofil immer geführt ist und sich in Fahrzeuglängsrichtung auf einfache Weise verschieben läßt.

Zudem gibt es Pritschenfahrzeuge mit seitlichen Bordwänden, einem Planengestell sowie einer auf dieses aufgelegten Plane.

In Kenntnis dieses Standes der Technik liegt der Erfindung die Aufgabe zugrunde, eine verbesserte Führung und Festlegung der Plane an Fahrzeugen der beschriebenen Art zu schaffen.

Zur Lösung dieser Aufgabe führt die Lehre des unabhängigen Patentanspruchs 1. Die abhängigen Patentansprüche 2-12 zeigen günstige weitere Ausgestaltungen der Erfindung auf.

Erfindungsgemäß ist als Befestigungsmittel zwischen Deckhaut und Ladefläche an dieser seitlich wenigstens ein -- quer zur Längsachse des Fahrzeuges angebrachtes -- Profil angelenkt sowie in Abstand zur Gelenkstelle mit zumindest einer Einformung zur lösbaren Festlegung eines Halteelements der Deckhaut versehen; die Plane wird mit einem Randbeschlag in die Einformung eingesetzt, wobei die Wahl des Neigungswinkels der Planenebene zur Ladefläche eingestellt zu werden vermag. Dazu hat sich ein aus einer Aluminiumlegierung stranggepreßtes Hohlprofil mit mehreren Hohlkammern zwischen einem Obergurt und einem Untergurt sowie mit wenigstens einer im Untergurt oder -- bevorzugt -- im Obergurt eingeformten Längsrinne als günstig erwiesen; letztere wird teilweise von zumindest einer gelenkwärts weisenden Kragleiste -- als Gegenelement für ein rinnenartiges Halteelement jenes Randbeschlages -- übergriffen.

Basis der Vorrichtung ist also ein Profil aus Stahl, einem Kunststoffverbund oder bevorzugt stranggepreßtem Leichtmetall, das -- am Fahrzeug seitlich -- mittels Scharnieren an der Pritschenplattform drehbar lagert, wobei die Arretierung der einzelnen Profilsegmente durch die Bordwand- oder Rungenverschlüsse des Fahrzeugs erfolgt. Die seitliche Plane und deren Verzurrung wird aus der Ebene der Pritschenplattform in vertikaler Richtung angehoben; die Plane mit den Spanngurten wird dank dieser Maßgaben kürzer, wobei die Spanngurte in das erwähnte Profil in dessen oberen Bereich eingehakt werden können. Die Scharniere sind -- neben der üblichen Druckbelastung -- zwar zusätzlich auf Zug beansprucht, jedoch kann die Plane problemlos im Toplaufschienenprofil verschoben werden. Die horizontale Verspannung in Fahrzeuglängsrichtung geschieht durch den bekannten Stirnwand- bzw. Heckrahmen-Spannmechanismus.

Zum Festlegen des erfindungsgemäßen Hohlprofils dient wenigstens ein Scharnier als Schwenklager, dessen Schwenkteil an das Profilstirnende angeschlossen ist und das an der Ladefläche mittels eines Scharniersockels festliegt. Der Anschluß des Scharniers an das Hohlprofil wird bevorzugt durch Schrauben hergestellt, in deren gurtparalleler Ebene auch die Paarung Kragleiste / Planenbeschlag liegt, d.h. die durch letzteren eingeleiteten Zugkräfte können ohne weiteres von dem mit den üblichen Druckkräften belasteten Scharnier aufgenommen werden. Hierzu dient vor allem, daß die Kragleiste gegenüber dem Obergurt des Hohlprofils zum Untergurt hin um ein bestimmtes Maß versetzt ist und bevorzugt mit dem an sie gelenkfern angeformten Abschnitt des Obergurtes fluchtet.

Zur Verstärkung des durch die hinterschnittene Längsrinne entstehenden Schwächungsbereiches kann dort der Untergurt mit einem verstärkten Boden ausgerüstet sein, und/oder die Längsrinne wird -- zumindest abschnittsweise -- von einem Verstärkungsstreifen übergriffen, der mit Haltegliedern in die Längsrinne beidseits begleitende hinterschnittene Längsnuten eingreift.

Nach einem weiteren Merkmal der Erfindung kann der gelenkseitige Abschnitt des Obergurtes mit der Kragleiste durch einen angeformten Stegstreifen verbunden werden, der mit Durchbrüchen für die Halteelemente der Deckhaut versehen ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1 bis Fig. 3:: Längsschnitte durch ein jeweils an einer Pritschenplattform angelenkte Profil;
- Fig. 4:: einen vergrößerten Ausschnitt zu Fig. 3;
- Fig. 5:: eine Schrägsicht auf ein Teil der Fig. 3.

An der Pritschenplattform 10 eines aus Gründen der Übersichtlichkeit nicht weiter dargestellten Pritschenfahrzeuges ist ein stranggepreßtes Hohlprofil 12 der beispielsweisen Länge a von hier 520 mm und einer Höhe h von 25 mm mittels Scharnieren 14 angelenkt.

Das Scharnier 14 ist mit einem Scharniersockel 16 auf der Pritschenplattform 10 festgeschraubt, sein von einem Achsbolzen 17 durchsetztes Schwenkteil 18 mit einem zum Betrachter weisenden Anschlagschenkel 19 an der Profilstirnwand 21 durch Schrauben 22 festgelegt; letztere enden in Muttern 23, die in einer querschnittlich zweistufigen Einschubbahn 26 hinter der Profilstirnwand 21 des Hohlprofiles 12 lagern.

An die Hinterwand 24 der Einschubbahn 26 schließt ein Kanal 28 etwa quadratischen Querschnittes an, und diesen folgen zwischen Obergurt 32 und Untergurt 34 des Hohlprofiles 14 mehrere Hohlkammern 30 rechteckigen Querschnittes, welche durch im Hohlprofil 12 verlaufende Querwände 36 voneinander getrennt sind.

Jener Anschlagschenkel 19 des Scharnierschwenkteils 18 übergreift mit einem abgewinkelten Firststreifen 20 den Kanal 28 oberhalb des Obergurtes 32 und ist mit diesem durch Nieten 38 verbunden. Der Anschlagschenkel 19 des Scharnierschwenkteiles 18 wird von einer unterhalb der Ebene des Untergurtes 34 angeformten Zunge 40 des Hohlprofiles 12 untergriffen; deren Länge e mißt hier 15 mm.

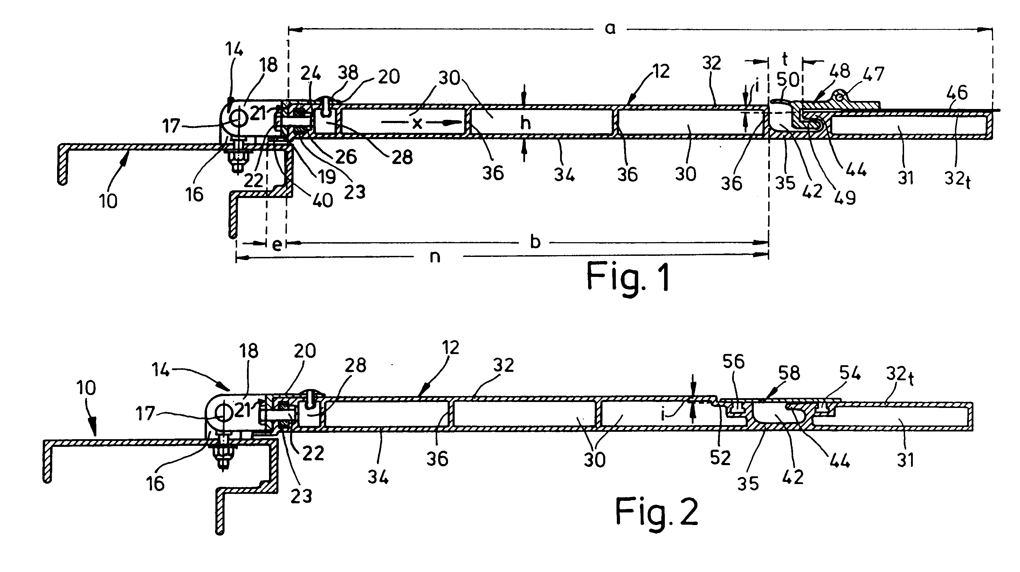

An die hintere Querwand 36 der in Fig. 1 dritten Hohlkammer 30 schließt in einem Abstand b (etwa 355 mm) von der Profilstirnwand 21 und in einem Abstand n vom Achsbolzen 17 eine Verdickung des Untergurtes 34 als Boden 35 einer hinterschnittenen Längsrinne 42 an; oberhalb dieser ist der Obergurt 32 unterbrochen und setzt sich in einem Abstand t von etwa 25 mm -- um ein Maß i von etwa 6 mm tiefenversetzt --mit einer Kragleiste 44 fort, die vom Obergurt 32t einer hinteren Profilkammer 31 scharnierwärts abragt.

Auf diesem Obergurt 32t lagert eine seitliche Plane 46, deren Endkantenbereich an einen hakenartigen Spanngurtbeschlag 48 angeschlossen ist; dieser hintergreift mit einem Rinnenende 49 haltend jene Kragleiste 44. Zur besseren Handhabung ist der Spanngurtbeschlag 48 mit einer Öse 47 für eine Zollschnur sowie das Rinnenende 49 mit einer gewölbten Griffrippe 50 ausgestattet. Diese Plane 46 lagert andernends in hier nicht erkennbarer Weise an einer sog. Toplaufschiene des Fahrzeuges und ist in dieser horizontal verschieblich. Nicht gezeigt ist auch, daß eine Arretierung der einzelnen um ihre Scharnierachsen 17 schwenkbaren Hohlprofile 12 durch Bordwand- oder Rungenverschlüsse des Fahrzeuges erfolgt; die freie Kante 51 des Hohlprofils 12 ist mit der Plane 46 aus der Ebene der Pritschenplattform 10 in mehr oder minder vertikale Richtung hochklappbar. Die horizontale Verspannung der Plane 46 geschieht durch einen aus Gründen der Übersichtlichkeit in der Zeichnung nicht wiedergegebenen front- und/oder heckwärtigen Spannmechanismus.

Durch die von der Plane 46 bzw. deren Rinnenende 49 in das Hohlprofil 12 einleitbaren Zugkräfte (Pfeilrichtung x) wird das Scharnier 14 etwa in Höhe der Schrauben 22 belastet, also zwischen Ober- und Untergurt 32, 34.

Die Unterbrechung des Obergurtes 32, 32t durch die Längsrinne 42 führt zu einer erheblichen Schwächung des Hohlprofiles 12 in dessen hinteren Bereich. In dieser belastungsmäßig kritischen Partie ist das Hohlprofil 12 nach Fig. 2 so ausgebildet, daß beidseits der Längsrinne 42 -- in den tieferliegenden Obergurt 32t und in einen mit diesem fluchtenden schulterartigen Absatz 52 des vorderen Obergurts 32 -- hinterschnittene Längsnuten 54 eingeformt sind, in denen Haltebolzen 56 eines die Längsrinne 42 überbrückenden Verstärkungsstreifens 58 lagern. Letzterer ist bevorzugt ein aus Stahl, Kohlefasern oder ähnlichem Werkstoff hergestellter Gurt.

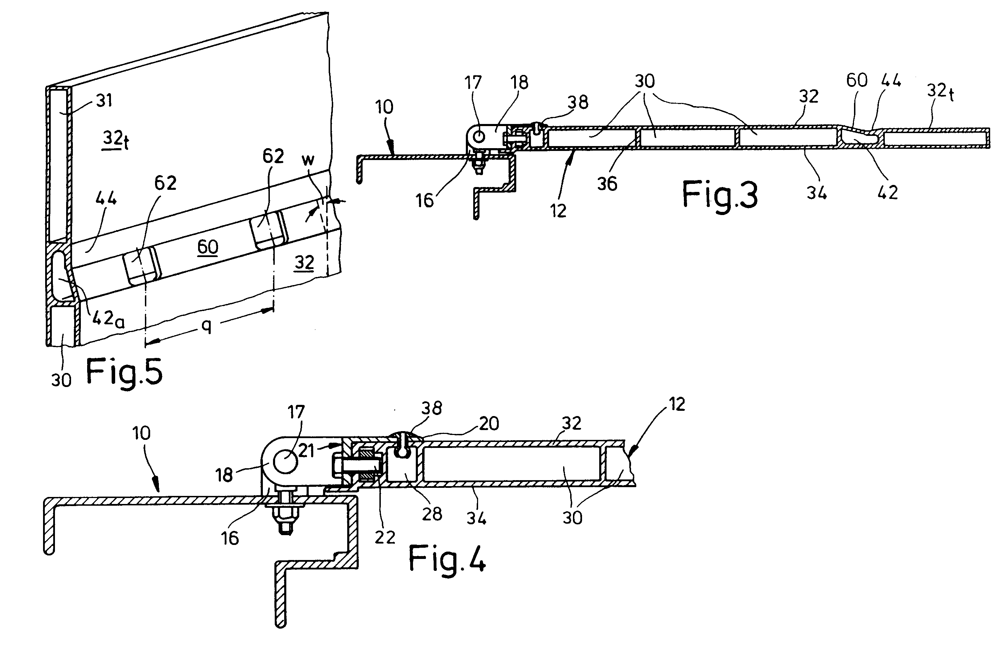

Beim Ausführungsbeispiel der Fig. 3 wird die Längsrinne 42 von einem zwischen vorderem Obergurt 32 und tieferliegender Kragleiste 44 des hinteren Obergurts 32t verlaufenden, in einem Winkel w zum vorderen Obergurt 32 geneigten blinden Stegstreifen 60 auf, der die Längsrinne 42 abdeckt und gemäß Fig. 5 örtlich zur Aufnahme der Spannbeschläge 48 mit rechteckigen Durchbrüchen 62 ausgestattet ist. Deren Abstand q mißt im Normalfall 300 bis 400 mm. Bei extrem niedriger Belastung bzw hoher Überbelastung sind ausnahmsweise auch 800 mm bis 1000 mm bzw. 200 mm bis 300 mm als Abstand q der Spannbeschläge 48 vorsehbar.

## Patentansprüche

1. Vorrichtung an einem Fahrzeug mit Ladefläche (10) und über dieser spannbar angeordneter flexibler Deckhaut (46), die seitlich an der Ladefläche sowie in Abstand über dieser, insbesondere an einer sog. Topflaufschiene, festlegbar ist,
dadurch gekennzeichnet,
daß als Befestigungsmittel zwischen Deckhaut (46) und Ladefläche (10) an dieser seitlich und quer zur Längsachse des Fahrzeuges wenigstens ein Profil (12) angelenkt sowie in Abstand (n) zur Gelenkstelle (17) mit zumindest einer Einformung (42) zur lösbaren Festlegung eines Halteelements (48) der Deckhaut versehen ist.

2. Vorrichtung nach Anspruch 1, gekennzeichnet durch ein aus einer Aluminiumlegierung stranggepreßtes Hohlprofil (12) mit mehreren Hohlkammern (26, 28, 30, 31) zwischen einem Obergurt (32) und einem Untergurt (34) sowie mit wenigstens einer im Obergurt oder Untergurt eingeformten Längsrinne (42), welche teilweise von zumindest einer gelenkwärts weisenden Kragleiste (44) od. dgl. Gegenelement für ein rinnenartiges Halteelement (48) der Deckhaut (46) übergriffen ist.

3. Vorrichtung nach Anspruch 1 oder 2, gekennzeichnet durch wenigstens ein Scharnier (14) als Schwenklager für das Hohlprofil (12), an das stirnseitig ein Schwenkteil (18) des Scharniers angeschlossen und dieses sowie ein an der Ladefläche (10) festliegender Scharniersockel (16) von einem Achsbolzen (17) durchgriffen sind.

4. Vorrichtung nach einem der Ansprüche 1 bis 3, dadurch gekennzeichnet, daß das Scharnier (14) durch Verbindungselemente wie Schrauben (22) an die Profilstirnwand (21) angeschlossen ist.

5. Vorrichtung nach Anspruch 2 oder 3, dadurch gekennzeichnet, daß die Kragleiste (44) gegenüber dem Obergurt (32) des Hohlprofils (12) zum Untergurt (34) hin um ein Maß (i) versetzt ist.

6. Vorrichtung nach wenigstens einem der Ansprüche 1 bis 5, dadurch gekennzeichnet, daß die hinterschnittene Längsrinne (42) mit einem den Untergurt (34) verstärkenden Boden (35) versehen ist.

7. Vorrichtung nach Anspruch 2 oder 3, dadurch gekennzeichnet, daß die Kragleiste (44) gegenüber dem Untergurt (34) des Hohlprofils (12) zum Obergurt (32) hin um ein Maß (i) versetzt ist.

8. Vorrichtung nach wenigstens einem der Ansprüche 1 bis 4 oder 7, dadurch gekennzeichnet, daß die hinterschnittene Längsrinne (42) mit einem den Obergurt (32) verstärkenden Boden versehen ist.

9. Vorrichtung nach wenigstens einem der Ansprüche 1 bis 8, dadurch gekennzeichnet, daß die Kragleiste (44) mit dem an sie gelenkfern angeformten Abschnitt des Obergurtes (32t) oder des versetzten Untergurtes (34) fluchtet.

10. Vorrichtung nach wenigstens einem der Ansprüche 1 bis 9, dadurch gekennzeichnet, daß die Längsrinne (42) zumindest abschnittsweise von einem Verstärkungsstreifen (58) übergriffen ist und dieser mit Haltegliedern (56) in hinterschnittene Längsnuten (54) eingreift, welche die Längsrinne zumindest teilweise beidseits begleiten.

11. Vorrichtung nach wenigstens einem der Ansprüche 1 bis 9, dadurch gekennzeichnet, daß der gelenkseitige Abschnitt des Obergurtes (32) mit der Kragleiste (44) durch einen angeformten Stegstreifen (60) verbunden und dieser mit Durchbrüchen (62) für die Halteelemente (48) der Deckhaut (46) versehen ist.

12. Vorrichtung nach wenigstens einem der Ansprüche 1 bis 9, dadurch gekennzeichnet, daß der gelenkseitige Abschnitt des Untergurtes (34) mit der Kragleiste (44) durch einen angeformten Stegstreifen (60) verbunden und dieser mit Durchbrüchen (62) für die Halteelemente (48) der Deckhaut (46) versehen ist.

## Claims

1. Device on a vehicle comprising a platform (10) and a flexible cover (46) which is stretched over the latter and can be secured laterally to the platform and at a distance above it, in particular to what is referred to as a top guide rail,
characterised in that at least one profile (12) serving as a securing means between the cover (46) and the platform (10) is hinged laterally on to the latter transversely to the longitudinal axis of the vehicle and is provided at a distance (n) from the hinge point (17) with at least one moulded-in portion (42) for the releasable securing of a holding element (48) for the cover.

2. Device according to claim 1, characterised by a hollow profile (12) extruded from an aluminium alloy with a plurality of hollow chambers (26, 28, 30, 31) between a top flange (32) and a bottom flange (34) and with at least one longitudinal channel (42) moulded into the top flange or bottom flange and partially embraced by at least one cantilever bar (44) or similar counter element directed towards the hinge for a channel-shaped holding element (48) for the cover (46).

3. Device according to claim 1 or claim 2, characterised by at least one hinge (14) serving as a swivel bearing for the hollow profile (12) to the end face of which a swivel part (18) of the hinge is connected, the hinge and a hinge socket (16) firmly secured to the platform (10) being traversed by an axle bolt (17).

4. Device according to one of claims 1 to 3, characterised in that the hinge (14) is connected to the end wall (21) of the profile by means of connecting elements such as screws (22).

5. Device according to claim 2 or claim 3, characterised in that the cantilever bar (44) is offset by an amount (i) towards the bottom flange (34) relative to the top flange (32) of the hollow profile (12).

6. Device according to at least one of claims 1 to 5, characterised in that the undercut longitudinal channel (42) is provided with a bottom (35) reinforcing the bottom flange (34).

7. Device according to claim 2 or claim 3, characterised in that the cantilever bar (44) is offset by an amount (i) towards the top flange (32) relative to the bottom flange (34) of the hollow profile (12).

8. Device according to at least one of claims 1 to 4 or 7, characterised in that the undercut longitudinal channel (42) is provided with a bottom reinforcing the bottom flange (32).

9. Device according to at least one of claims 1 to 8, characterised in that the cantilever bar (44) is aligned with the portion of the top flange (32t) or the offset bottom flange (34) moulded on to it remote from the hinge.

10. Device according to at least one of claims 1 to 9, characterised in that the longitudinal channel (42) is embraced at least in portions by a reinforcing strip (58) and the latter engages by means of holding members (56) in undercut longitudinal grooves (54) at least partially associated with the longitudinal channel on either side.

11. Device according to at least one of claims 1 to 9, characterised in that the portion of the top flange (32) on the hinge side is connected to the cantilever bar (44) by means of a moulded-on web strip (60) and the latter is provided with openings (62) for the holding elements (48) for the cover (46).

12. Device according to at least one of claims 1 to 9, characterised in that the portion of the bottom flange (34) on the hinge side is connected to the cantilever bar (44) by means of a moulded-on web strip (60) and the latter is provided with openings (62) for the holding elements (48) for the cover (46).

## Revendications

1. Dispositif pour la plate-forme de chargement (10) d'un camion et bâche (46) tendue au-dessus de celle-ci, bâche pouvant être fixée latéralement à la plate-forme de chargement et à distance au dessus de celle-ci, en particulier à une barre glissière du type à cavité, caractérisé en ce que :
comme moyen de fixation entre la bâche (46) et la plate-forme (10), au moins un profil (12) est articulé latéralement à cette dernière et transversalement à l'axe longitudinal du véhicule, et en ce qu'il est pourvu, à une distance (n) du point d'articulation (17), d'au moins une empreinte (42) permettant de fixer, avec une possibilité de l'en détacher, un élément de retenue (48) de la bâche.

2. Dispositif selon la revendication 1, caractérisé par un profil creux (12) extrudé dans un alliage d'aluminium et comportant plusieurs chambres creuses (26, 28, 30, 31) entre une membrure supérieure (32) et une membrure inférieure (34), et au moins une rigole longitudinale (42) formée dans la membrure supérieure ou la membrure inférieure, et qui est prise partiellement, par le dessus, par au moins un rebord (44) ou élément complémentaire similaire dirigé vers l'articulation, pour un élément de retenue (48) du type rigole de la bâche (46).

3. Dispositif selon la revendication 1 ou 2, caractérisé par au moins une charnière (14) en tant que palier de pivotement pour le profil creux (12) auquel une partie pivotante (18) de la charnière est raccordée au niveau frontal, et en ce que cette dernière et un socle de charnière (16) solidaire de la plate-forme de chargement (10) sont traversés par un tourillon (17).

4. Dispositif selon l'une quelconque des revendications 1 à 3, caractérisé en ce que la charnière (14) est raccordée à la paroi frontale (21) du profil par des éléments de liaison tels que des vis (22).

5. Dispositif selon la revendication 2 ou 3, caractérisé en ce que le rebord (44) est décalé d'une mesure (i) dans la direction de la membrure inférieure (34), par rapport à la membrure supérieure (32) du profil creux (12).

6. Dispositif selon au moins l'une des revendications 1 à 5, caractérisé en ce que la rigole longitudinale (42) contre-dépouillée est pourvue d'un fond (35) consolidant la membrure inférieure (34).

7. Dispositif selon la revendication 2 ou 3, caractérisé en ce que le rebord (44) est décalé d'une mesure (i) dans la direction de la membrure supérieure (32), par rapport à la membrure inférieure (34) du profil creux (12).

8. Dispositif selon au moins l'une des revendications 1 à 4 ou 7, caractérisé en ce que la rigole longitudinale (42) contre-dépouillée est pourvue d'un fond consolidant la membrure supérieure (32).

9. Dispositif selon au moins l'une des revendications 1 à 8, caractérisé en ce que le rebord (44) est aligné sur la partie de la membrure supérieure (32t) ou de la membrure inférieure (34) en retrait, qui est formée sur celles-ci et distante de l'articulation.

10. Dispositif selon au moins l'une des revendications 1 à 9, caractérisé en ce que la rigole longitudinale (42) est recouverte, au moins par portions, par une bande de renfort (58) et en ce que celle-ci s'engage, avec des éléments de maintien (56), dans des rainures longitudinales (54) contre-dépouillées qui accompagnent de part et d'autre et au moins en partie la rigole longitudinale.

11. Dispositif selon au moins l'une des revendications 1 à 9, caractérisé en ce que la partie de la membrure supérieure (32) se trouvant côté articulation est raccordée au rebord (44) par une âme en forme de bande (60) préformée, et en ce que celle-ci est pourvue de percements (62) pour les éléments de retenue (48) de la bâche (46).

12. Dispositif selon au moins l'une des revendications 1 à 9, caractérisé en ce que la partie de la membrure inférieure (34) se trouvant côté articulation est raccordée au rebord (44) par une âme en forme de bande (60) et en ce que celle-ci est pourvue de percements (62) pour les éléments de retenue (48) de la bâche (46).
